# EUROPÄISCHE PATENTSCHRIFT

(11) **EP 2 359 540 B1**
(45) Veröffentlichungstag und Bekanntmachung des Hinweises auf die Patenterteilung: **20.06.2018**
(21) Anmeldenummer: 09741215.9
(22) Anmeldetag: 02.10.2009
(51) Int. Cl.: H04L 12/43

(54) **VERFAHREN ZUM ANSCHLUSS VON NETZSEGMENTEN MIT REDUNDANZEIGENSCHAFTEN AN EIN BELIEBIGES NETZWERK**
METHOD FOR CONNECTING NETWORK SEGMENTS HAVING REDUNDANCY PROPERTIES TO ANY NETWORK
PROCÉDÉ DE RACCORDEMENT À UN RÉSEAU QUELCONQUE DE SEGMENTS DE RÉSEAU POSSÉDANT DES PROPRIÉTÉS DE REDONDANCE

(30) Priorität: 02.10.2008 DE 102008049944
(43) Veröffentlichungstag der Anmeldung: 24.08.2011
(73) Patentinhaber: Hirschmann Automation and Control GmbH, 72654 Neckartenzlingen (DE)
(72) Erfinder: MAISCH, Werner, 72639 Neuffen (DE)
(74) Vertreter: Greif, Thomas
(86) Internationale Anmeldenummer: PCT/EP2009/007082
(87) Internationale Veröffentlichungsnummer: WO 2010/037556

(56) Entgegenhaltungen:
- EP-A- 1 575 221
- EP-A- 1 729 453
- US-A1- 2004 223 503
- US-A1- 2006 215 546
- US-A1- 2006 250 969

## Beschreibung

Die Erfindung betrifft ein Verfahren zum Betreiben eines lokalen Netzwerks, insbesondere ein Ethernet-Netzwerk, mit Redundanzeigenschaften, wobei in einem geschlossenen Ring ein Redundanzmanager über die Strecken dieses Rings wacht, gemäß den Merkmalen des Oberbegriffes des Patentanspruches 1.

Ein lokales Netzwerk, insbesondere ein Ethernet-Netzwerk, mit Redundanzeigenschaften, ist aus der DE 198 10 587 A1 bekannt. Ein einzelner Ring (mehrere Netzwerkinfrastrukturgeräte wie zum Beispiel Switches sind über Linien wie zum Beispiel Kabel zu einem Ring zusammengeschaltet) enthält immer auch einen Redundanzmanager, der die Datenvermittlung unterbricht, wenn der Ring geschlossen ist, oder die Datenvermittlung ermöglicht, wenn der Ring unterbrochen ist. In DE 198 10 587 A1 prüft ein an den Linienenden angeschlossener Redundanzmanager den Zustand eines einzelnen Rings. Dazu sendet er an einem Linienende ein Testpakettelegramm über die Linie an den Port des einen Netzwerkinfrastrukturgerätes, welches das Testpakettelegramm über die folgenden Linien und die folgenden Netzwerkinfrastrukturgeräte an das andere Linienende weiterleitet, und prüft, ob es am anderen Linienende empfangen wird. Im fehlerfreien Fall trennt der Redundanzmanager die beiden Linienenden voneinander und im Fehlerfall verbindet er die Linienenden. Das Dokument EP1575221 A1 offenbart mehrere Ringnetze, die über gemeinsam genutzte Strecken verfügen, wobei diese Strecken durch Segment-Controller an beiden Enden der Strecken überwacht werden. Jedes der Ringnetze enthält dabei einen eigenen RedundanzManager

Wenn zwei einzelne Ethernet-Ringe miteinander verbunden würden, geschieht dies über gemeinsame Netzwerkknoten und gemeinsame Strecken, wobei sich in jedem vollständigen Ethernet-Ring ein Redundanzmanager befinden würde. Bei Ausfall oder Wiederherstellung einer gemeinsamen Strecke reagieren beide Redundanzmanager im ungünstigsten Fall zur gleichen Zeit und verursachen damit eine Schleife oder bewirken, dass einzelne Netzsegmente unerreichbar sind.

Durch die gemeinsame Strecke ist das Verhalten der Ringmanager in den verbundenen Ringen voneinander abhängig. Jeder Ring müsste unterschiedlich konfiguriert sein, damit beim Ausfall oder dem Wiederherstellen einer gemeinsamen Strecke nur ein Redundanzmanager reagiert.

In EP 1 729 453 A1 sind zwei Ringe über eine gemeinsame Strecke im Ring miteinander verbunden, wobei in jedem Ring ein Ringmanager (= Redundanzmanager) über den Zustand seines Ringes wacht. Bei einer Unterbrechung der gemeinsamen Strecke wird nur ein Ringmanager über die Änderung der gemeinsamen Strecke informiert. Dazu müssen aber die Ringmanager unbedingt unterschiedlich konfiguriert sein.

Es besteht also eine Abhängigkeit zwischen den Parametern in den einzelnen Ringen. Dies wirkt sich insbesondere bei einer falschen Konfiguration der Ringmanager aus. Sollten zwei Ringmanager die gleichen Parameter eingestellt haben oder Ringmanager zur gleichen Zeit reagieren, hat dies unvorhersehbare Folgen für die Stabilität und die Umschaltung der Ringe und nicht zuletzt für die Erreichbarkeit der Netzteilnehmer.

Der Erfindung liegt die Aufgabe zugrunde, die eingangs geschilderten Nachteile zu vermeiden.

Diese Aufgabe ist durch die Merkmale des Patentanspruches 1 gelöst.

Erfindungsgemäß ist vorgesehen, dass zumindest ein weiterer Ring als Teilring angeschlossen wird, wobei dieser Teilring keinen Redundanzmanager enthält und die Überwachung dieses Teilrings Segment-Controller an beiden Enden des Teilrings durch das Senden von Kontrollpaketen in diesen Teilring übernehmen.

In einem geschlossenen Ring, insbesondere einem Ethernet-Ring, wacht unverändert ein Redundanzmanager über die Strecken dieses Rings.

Ein weiterer Ring wird als Teilring angeschlossen, der keinen Redundanzmanager (oder Ringmanager) enthält. Die Überwachung des Teilrings übernehmen neue Segment-Controller an beiden Enden des Teilrings durch das Senden von Kontrollpaketen in diesen Teilring. Damit ist gewährleistet, dass die zur Überwachung des Teilrings eingesetzten Kontrollpakete nicht über eine gemeinsame Strecke müssen und auf diese Art und Weise unabhängig sind von Veränderungen in anderen Ringen, Teilringen oder Netzsegmenten.

Die Reaktion auf eine Veränderung in einem Ring oder Teilring ist auf den zugehörigen Ring oder Teilring beschränkt. In jedem Ringsegment können damit unterschiedliche Reaktionszeiten erlaubt sein, wodurch ein Zusammenfügen von Ringen, insbesondere Ethernet-Ringen, unterschiedlicher Bauart möglich wird.

Eine Unterbrechung in einem Ringsegment hat keinerlei Auswirkung auf ein anderes Ringsegment, d.h. in jedem Ringsegment darf es eine Unterbrechung geben.

Dies hat den Vorteil, dass bei der Verbindung zweier Netzwerke mit Ringstruktur über jede Strecke in diesen Ringen nur eine Instanz wachen darf. Es gibt keine gemeinsamen Strecken mehr, wodurch die Abhängigkeit zwischen den Netzsegmenten, Ringen und den Redundanzmanagern wegfällt.

Jeder Netzwerkknoten in jedem angeschlossenen Teilring darf genau gleich konfiguriert sein. Dies hat enorme Vorteile für den Anwender. Nur eine einzige Konfiguration für alle Netzwerkknoten in den Teilringen vermindert den zeitlichen Aufwand für die Konfiguration des Ringnetzwerks erheblich. Zudem ist die Gefahr eines Fehlverhaltens durch Fehlkonfigurationen erheblich gemindert, wodurch wiederum der Aufwand einer Fehlersuche deutlich minimiert ist. Der Anwender muss lediglich die Segment-Controller konfigurieren. Bei Anschluss mehrerer Netzsegmente an die gleichen Segment-Controller müssen sich die Kontrollpakete unterscheiden, ebenso wenn innerhalb eines Teilrings ein weiterer Teilring angeschlossen wird.

Im folgenden ist die Erfindung mit ihren wesentlichen und wichtigen Aspekten noch einmal zusammengefasst:
Zum Anschluss eines Netzsegments mit Redundanzeigenschaften an ein beliebiges Netzwerk befindet sich an beiden Enden des anzuschließenden Netzsegments je ein Segment-Controller.

Das Netzsegment zusammen mit den beiden Segment-Controllern wird so an ein bestehendes Netzwerk angeschlossen, dass die beiden Segment-Controller in das bestehende Netzwerk eingefügt werden.

Wird ein Netzsegment zum Beispiel an einen Ethernet-Ring angeschlossen, müssen sich die beiden Segment-Controller dieses Netzsegments im selben Ethernet-Ring befinden.

Jeder Segment-Controller sendet ständig Kontrollpakete in das angeschlossene Netzsegment. Durch Ausbleiben dieser Kontrollpakete erkennen die Segment-Controller eine Unterbrechung des Netzsegments. Empfängt ein Segment-Controller am jeweils anderen Ende des Netzsegments die Kontrollpakete, ist das Netzsegment geschlossen.

Kontrollpakete verlassen das zugehörige Netzsegment nicht.

In einem geschlossenen Netzsegment hat einer der beiden Segment-Controller an den Linienenden dieses Netzsegments ein Linienende für den Datenverkehr geblockt. Über einen für den Datenverkehr geblockten Port empfängt und sendet ein Segment-Controller nur die Kontrollpakete.

Die Entscheidung, wer von beiden Segment-Controllern sein Linienende blockt, trifft jeder Segment-Controller anhand des Inhalts der Kontrollpakete. Dazu wird insbesondere die Ethernet-MAC-Adresse der beteiligten Segment-Controller herangezogen. Der Segment-Controller mit der höheren Ethernet-MAC-Adresse blockt das Linienende eines geschlossenen Netzsegments.

In den Kontrollpaketen können Anweisungen für die Netzwerkknoten im Netzsegment enthalten sein. Jeder Netzwerkknoten im angeschlossenen Netzsegment empfängt die Kontrollpakete und reagiert auf die Anweisungen.

Unterscheidungsmerkmale in den Kontrollpaketen ermöglichen den gleichzeitigen Anschluss mehrerer Netzsegmente am gleichen Segment-Controller sowie den Anschluss weiterer Netzsegmente innerhalb eines bestehenden Netzsegments.

In einem mittels Segment-Controllern angeschlossenen Netzsegment darf sich kein Redundanzmanager oder Ringmanager befinden.

Bei Ausfall einer Verbindung im mittels Segment-Controllern angeschlossenen Netzsegment informieren die Netzwerkknoten an der unterbrochenen Stelle die Segment-Controller von der Unterbrechung, woraufhin der Segment-Controller mit dem geblockten Linienende dieses Linienende sofort für die Datenvermittlung freigibt.

Jeder Netzwerkknoten im Netzsegment hält beim Wiederherstellen einer unterbrochenen Verbindung den Port dieser Verbindung zunächst geblockt. Über diesen geblockten Port werden dann nur die Kontrollpakete der Segment-Controller empfangen und weitergeleitet. Die Anweisung an die Netzwerkknoten im Netzsegment zur Freigabe der Datenvermittlung erfolgt durch einen Segment-Controller. Dazu teilt ein Segment-Controller diesem Netzwerkknoten den Zeitpunkt der Freigabe im Kontrollpaket mit. Zu diesem Zeitpunkt blockt dann einer von beiden Segment-Controllern das Linienende des Netzsegments, gleichzeitig werden alle Adresstabellen im Netzsegment gelöscht und der angewiesene Netzwerkknoten im Netzsegment gibt seinen Port zur Vermittlung frei.

Im folgenden ist das Verfahren für den Anschluss eines Ethernet-Teilrings an einen Ethernet-Ring beschrieben. Das Verfahren kann jedoch zum Anschluss eines jeglichen Netzsegments mit Redundanzeigenschaften an ein beliebiges Netzwerk angewendet werden.

Es geht somit um ein lokales Netzwerk, insbesondere ein Ethernet-Netzwerk, mit Redundanzeigenschaften und wird vor allem zur Verbindung von Ethernet-Teilringen mit einem Ethernet-Ring angewendet. Das so entstandene Netzwerkgebilde kann auch als Verbund von Ethernet-Ringen angesehen werden.

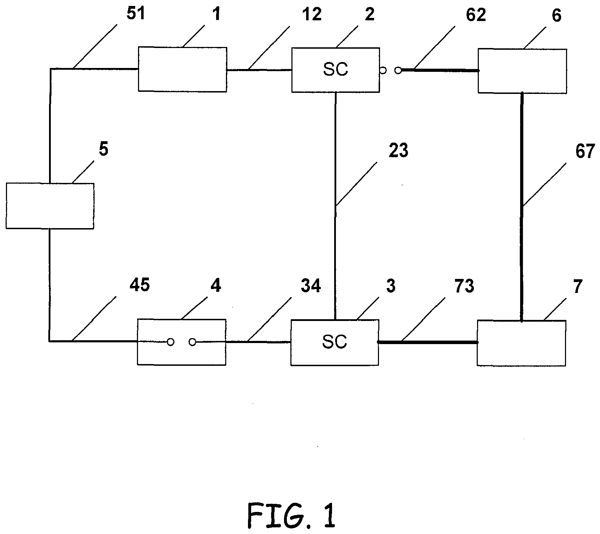

Fig.1 zeigt ein Netzwerk mit Ringstruktur. Die Netzwerkknoten 1 bis 5 sind durch die Leitungen (= Linien = Kabel) 12, 23, 34, 45 und 51 zu einem Ring verbunden, in dem der Netzwerkknoten 4 die Rolle eines Redundanzmanagers hat und bei geschlossenem Ring den Datenverkehr unterbrochen hat.

Um an diesen Ring ein weiteres Netzsegment mit Redundanzeigenschaften anschließen zu können, übernehmen die Netzwerkknoten 2 und 3 die Rolle eines Segment-Controllers ("SC"). Ein linienförmiges Netzsegment mit den Geräten 6 und 7 und der Verbindung 67 wird mit den Leitungen 62 und 73 an die Netzwerkknoten 2 und 3 angeschlossen.

Jeder Segment-Controller sendet ständig Kontrollpakete über Ports, die zum Anschluss von Netzsegmenten vorgesehen sind, in diesem Fall an den Ports, die mit den Leitungen 62 und 73 verbunden werden, und überwacht damit den Zustand der Netzsegmente.

Die Ports der Segment-Controller, die mit den Leitungen 62 und 73 verbunden werden, bleiben zunächst für den Datenverkehr geblockt. An geblockten Ports senden und empfangen die Segment-Controller lediglich ihre Kontrollpakete. Sobald ein Segment-Controller die Kontrollpakete des jeweils anderen Segment-Controllers über die Leitungen 62 bzw. 73 empfängt, kann er anhand der in den Kontrollpaketen enthaltenen Ethernet-MAC-Adresse des Absenders erkennen, wer die höhere Ethernet-MAC-Adresse hat. Der Netzwerkknoten mit der höheren Ethernet-MAC-Adresse lässt das Linienende geblockt, solange er die Kontrollpakete des anderen empfängt. In diesem Beispiel hätte Netzwerkknoten 2 die höhere Ethernet-MAC-Adresse, woraufhin er die Strecke 62 für den Datenverkehr geblockt lässt, während Netzwerkknoten 3 die Strecke 73 für die Vermittlung des Datenverkehrs freigibt. Kontrollpakete verlassen das zugehörige Netzsegment nicht. In diesem Beispiel werden Kontrollpakete, die an den Verbindungen 62 und 73 gesendet und empfangen werden, nicht an die Verbindungen 12, 23 oder 34 weitergeleitet.

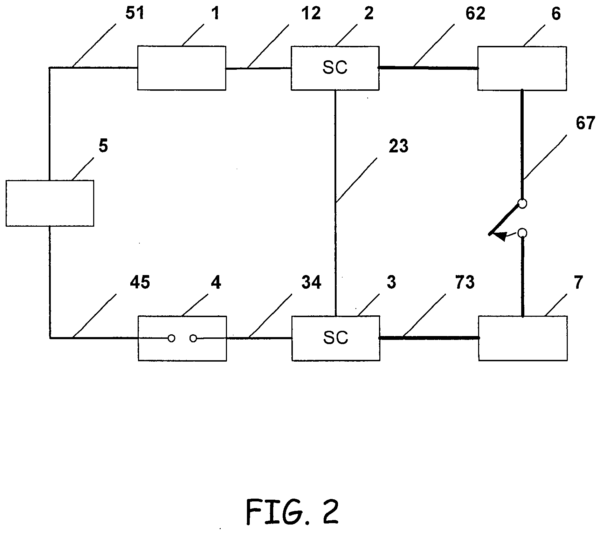

In Fig. 2 wird die Verbindung 67 unterbrochen. Anhand der ausbleibenden Kontrollpakete erkennen die Segment-Controller 2 und 3, dass das Netzsegment unterbrochen ist, woraufhin der Segment-Controller 2 seinen mit der Leitung 62 verbundenen und noch geblockten Port für die Vermittlung des Datenverkehrs freigibt.

Damit bei Ausfall der Verbindung 67 die Datenvermittlung zum Netzwerkknoten 6 schneller wiederhergestellt wird, können die Netzwerkknoten 6 und 7 eine Nachricht an die Segment-Controller senden, in der der Ausfall einer Verbindung angezeigt wird. Daraufhin gibt Segment-Controller 2 seinen geblockten Port sofort zur Vermittlung frei, während Segment-Controller 3 diese Nachricht ignorieren kann, da die Verbindung 73 bereits vermittelt.

Bei Wiederherstellung der Verbindung 67 lassen die Netzwerkknoten 6 und 7 ihren jeweiligen mit der Leitung 67 verbundenen Port zunächst geblockt. Über die geblockte Verbindung 67 werden nur Kontrollpakete der Segment-Controller empfangen und weitergeleitet. Dies ermöglicht den Segment-Controllern 2 und 3 den Empfang von Kontrollpaketen vom jeweils anderen Segment-Controller und damit die Feststellung eines wiederhergestellten Netzsegments. Anhand der Ethernet-MAC-Adresse erkennen die beiden Segment-Controller, wer von beiden das Linienende des Netzsegments beim Umschaltvorgang blockt. Der Segment-Controller mit der höheren Ethernet-MAC-Adresse teilt allen Netzwerkknoten in seinen Kontrollpaketen den Zeitpunkt der Umschaltung mit. Ist der Umschaltzeitpunkt gekommen, blockt in diesem Beispiel Segment-Controller 2 die Verbindung 62, die Netzwerkknoten 2, 3, 6 und 7 löschen ihre Adresstabelle und die Netzwerkknoten 6 und 7 geben die Verbindung 67 für die Datenvermittlung frei.

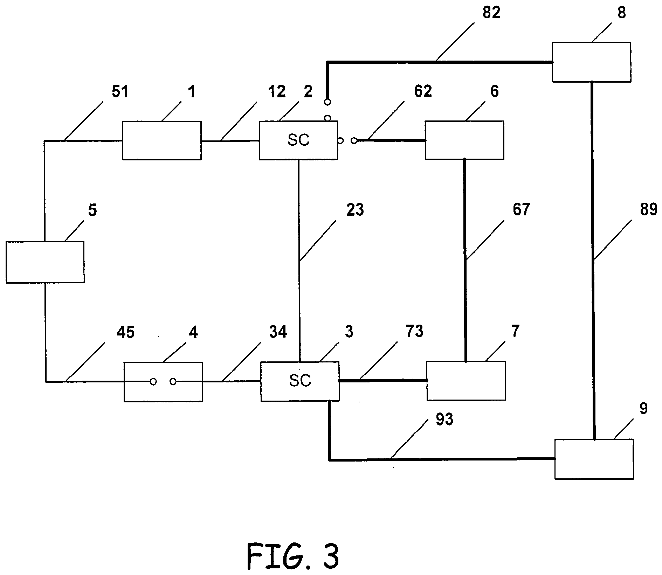

In Fig. 3 ist ein weiteres Netzsegment mit den Netzwerkknoten 8 und 9 und der Verbindung 89 durch die Leitungen 82 und 93 an die Segment-Controller 2 und 3 angeschlossen. Damit die Segment-Controller die einzelnen Netzsegmente unterscheiden können, sind in den Kontrollpaketen Unterscheidungsmerkmale vorhanden.

In jedem Netzsegment laufen die Umschaltvorgänge getrennt voneinander ab. Jeder Segment-Controller reagiert nur auf Veränderungen im zugehörigen Netzsegment. Eine Unterbrechung der Verbindung 67 führt nur zur Freigabe der Datenvermittlung der Verbindung 62, nicht jedoch der Verbindung 82. Weiterhin führt eine gleichzeitige Unterbrechung der Verbindungen 23 und 51 nicht zur Vermittlungsfreigabe der Verbindungen 82 oder 62.

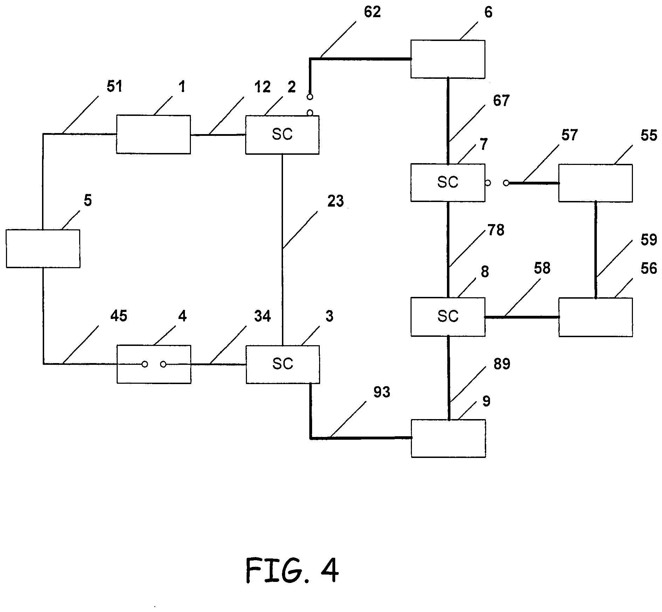

Fig. 4 zeigt einen Ring mit den Netzwerkknoten 1 bis 5, an den über die Segment-Controller 2 und 3 ein Netzsegment mit den Netzwerkknoten 6 bis 9 angeschlossen ist, an das wiederum ein Netzsegment mit den Netzwerkknoten 55 und 56 an den Segment-Controllern 7 und 8 angeschlossen ist. Die Kontrollpakete der Segment-Controller 2 und 3 müssen sich von den Kontrollpaketen der Segment-Controller 7 und 8 unterscheiden. Damit führt eine Unterbrechung der Verbindungen 78 nur zur Freigabe der Datenvermittlung der Verbindung 62, nicht jedoch der Verbindung 57. Die Segment-Controller 7 und 8 senden ihre Kontrollpakete nur in die Verbindungen 57 und 58, nicht jedoch in die Verbindungen 67, 78 oder 89. Gleichzeitig empfangen die Segment-Controller 7 und 8 auch die Kontrollpakete der Segment-Controller 2 und 3 und befolgen die in diesen Kontrollpaketen enthaltenen Anweisungen für den Umschaltvorgang des zugehörigen Netzsegments.

Wenn ein Netzsegment an einen Ring angeschlossen wird, müssen sich die beiden Subring-Controller im gleichen Ring befinden. Dies gilt auch, wenn es nur ein Teilring ist. In Fig. 4 wird das Netzsegment mit den Netzwerkknoten 6 bis 9 als Teilring angesehen. Deshalb kann ein weiteres Netzsegment mit den Netzwerkknoten 55 und 56 angeschlossen werden, da sich die zugehörigen Subring-Controller 7 und 8 in diesem Teilring befinden.

Mit diesem Verfahren können keine eigenständigen Ringe miteinander verbunden werden. Würden in Fig. 4 die Netzwerkknoten 7, 8, 55 und 56 einen Ring bilden, mit Netzwerkknoten 55 als Redundanzmanager, könnte dieser Ring nicht verbunden werden mit dem Ring aus den Netzwerkknoten 1 bis 5 mit den Netzwerkknoten 2, 3, 7 und 8 als Segment-Controller. Die Segment-Controller 2 und 7 könnten nur die Verbindungen 62 und 67 überwachen, nicht jedoch auf eine Unterbrechung der Verbindung 89 oder 93 reagieren, und beide Ringe blieben voneinander getrennt.

## Patentansprüche

1. Verfahren zum Betreiben eines lokalen Netzwerks, insbesondere eines Ethernet-. Netzwerks, mit Redundanzeigenschaften, wobei in einem geschlossenen Ring ein Redundanzmanager (4) über die Strecken (12, 23, 34, 45, 51) dieses Rings wacht, wobei zumindest ein weiteres Netzsegment als Teilring (62, 6, 67, 7, 73) angeschlossen wird, und die Überwachung dieses Teilrings Segment-Controller (2, 3) an beiden Enden des Teilrings durch das Senden von Kontrollpaketen in diesen Teilring übernehmen, **dadurch gekennzeichnet dass** der Teilring keinen Redundanzmanager enthält.

2. Verfahren nach Anspruch 1, **dadurch gekennzeichnet, dass** die Reaktion auf eine Veränderung in einem Ring oder Teilring auf den zugehörigen Ring oder Teilring beschränkt ist.

3. Verfahren nach Anspruch 1 oder 2, **dadurch gekennzeichnet, dass** jeder Netzwerkknoten in jedem angeschlossenen Teilring genau gleich konfiguriert ist.

4. Verfahren nach einem der vorhergehenden Ansprüche, **dadurch gekennzeichnet, dass** sich die beiden Segment-Controller dieses Netzsegments im selben Ring, insbesondere im selben Ethernet-Ring, befinden, wenn ein Netzsegment an einen Ring, insbesondere an einen Ethernet-Ring, angeschlossen wird.

5. Verfahren nach einem der vorhergehenden Ansprüche, **dadurch gekennzeichnet, dass** jeder Segment-Controller Kontrollpakete in das angeschlossene Netzsegment sendet, wobei durch Ausbleiben dieser Kontrollpakete die Segment-Controller eine Unterbrechung des Netzsegments erkennen, wohingegen dann das Netzsegment geschlossen ist, wenn ein Segment-Controller am jeweils anderen Ende des Netzsegments die Kontrollpakete empfängt.

6. Verfahren nach einem der vorhergehenden Ansprüche, **dadurch gekennzeichnet, dass** in einem geschlossenen Netzsegment einer der beiden Segment-Controller an den Linienenden dieses Netzsegments ein Linienende für den Datenverkehr geblockt hat, wobei ein Segment-Controller über einen für den Datenverkehr geblockten Port nur die Kontrollpakete empfängt und sendet.

7. Verfahren nach einem der vorhergehenden Ansprüche, **dadurch gekennzeichnet, dass** die Entscheidung, wer von beiden Segment-Controllern sein Linienende blockt, jeder Segment-Controller anhand des Inhalts der Kontrollpakete trifft, wobei dazu die MAC-Adresse, insbesondere die Ethernet-MAC-Adresse, der beteiligten Segment-Controller herangezogen wird und der Segment-Controller mit der höheren MAC-Adresse, insbesondere der höheren Ethernet-MAC-Adresse, das Linienende eines geschlossenen Netzsegments blockt.

8. Verfahren nach einem der vorhergehenden Ansprüche, **dadurch gekennzeichnet, dass** bei einem Ausfall einer Verbindung im mittels Segment-Controllern angeschlossenen Netzsegment die Netzwerkknoten an der unterbrochenen Stelle die Segment-Controller von der Unterbrechung informieren, woraufhin der Segment-Controller mit dem geblockten Linienende dieses Linienende sofort für die Datenvermittlung freigibt.

9. Verfahren nach einem der vorhergehenden Ansprüche, **dadurch gekennzeichnet, dass** jeder Netzwerkknoten in einem Netzsegment beim Wiederherstellen einer unterbrochenen Verbindung den Port dieser Verbindung zunächst geblockt hält, wobei über diesen geblockten Port dann nur die Kontrollpakete der Segment-Controller empfangen und weitergeleitet werden.

10. Verfahren nach einem der vorhergehenden Ansprüche, **dadurch gekennzeichnet, dass** die Anweisung an die Netzwerkknoten im Netzsegment zur Freigabe der Datenvermittlung durch einen Segment-Controller erfolgt, wozu ein Segment-Controller diesem Netzwerkknoten den Zeitpunkt der Freigabe im Kontrollpaket mitteilt und zu diesem Zeitpunkt dann einer von beiden Segment-Controllern das Linienende des Netzsegments blockt, wobei gleichzeitig alle Adresstabellen in diesem Netzsegment gelöscht werden und der angewiesene Netzwerkknoten in diesem Netzsegment seinen Port zur Vermittlung freigibt.

## Claims

1. Method for operating a local area network, in particular an Ethernet network, having redundancy properties, wherein in a closed ring a redundancy manager (4) watches over the sections (12, 23, 34, 45, 51) of this ring, wherein at least one further network segment is connected as a partial ring (62, 6, 67, 7, 73), and the monitoring of this partial ring is undertaken by segment controllers (2, 3) at the two ends of the partial ring by means of the sending of control packets to this partial ring, **characterized in that** the partial ring does not contain a redundancy manager.

2. Method according to Claim 1, **characterized in that** the reaction to an alteration in a ring or partial ring is restricted to the associated ring or partial ring.

3. Method according to Claim 1 or 2, **characterized in that** each network node in each connected partial ring is configured exactly alike.

4. Method according to one of the preceding claims, **characterized in that** the two segment controllers of this network segment are in the same ring, in particular in the same Ethernet ring, when a network segment is connected to a ring, in particular to an Ethernet ring.

5. Method according to one of the preceding claims, **characterized in that** each segment controller sends control packets to the connected network segment, wherein an absence of these control packets prompts the segment controllers to detect an interruption in the network segment, whereas the network segment is closed if a segment controller at the respective other end of the network segment receives the control packets.

6. Method according to one of the preceding claims, **characterized in that** in a closed network segment one of the two segment controllers at the line ends of this network segment has blocked a line end for data traffic, wherein a segment controller only receives and sends the control packets via a port blocked for data traffic.

7. Method according to one of the preceding claims, **characterized in that** the decision regarding which of the two segment controllers blocks its line end is made by each segment controller on the basis of the content of the control packets, this involving the MAC address, in particular the Ethernet MAC address, of the segment controllers involved being used and the segment controller having the higher MAC address, in particular the higher Ethernet MAC address, blocking the line end of a closed network segment.

8. Method according to one of the preceding claims, **characterized in that** failure of a connection in the network segment connected by means of segment controllers results in the network nodes at the point of interruption informing the segment controllers of the interruption, whereupon the segment controller having the blocked line end immediately opens this line end for data switching.

9. Method according to one of the preceding claims, **characterized in that** each network node in a network segment, on restoring an interrupted connection, initially keeps the port for this connection blocked, this blocked port then only being used to receive and forward the control packets of the segment controllers.

10. Method according to one of the preceding claims, **characterized in that** the instruction to the network nodes in the network segment to open the data switching is provided by a segment controller, which involves a segment controller notifying this network node of the time of opening in the control packet and one of the two segment controllers then blocking the line end of the network segment at this time, wherein at the same time all address tables in this network segment are erased and the instructed network node in this network segment opens its port for switching.

## Revendications

1. Procédé destiné à faire fonctionner un réseau local, notamment un réseau Ethernet possédant des propriétés de redondance, dans un anneau fermé, un gestionnaire de redondance (4) surveillant les trajectoires (12, 23, 34, 45, 51) dudit anneau, lors duquel on connecte au moins un segment de réseau supplémentaire en tant qu'anneau partiel (62, 6, 67, 7, 73) et la surveillance dudit anneau partiel est prise en charge par des contrôleurs de segments (2, 3) sur les deux extrémités de l'anneau partiel par l'envoi de paquets de contrôle dans ledit anneau partiel, **caractérisé en ce que** l'anneau partiel ne contient aucun gestionnaire de redondance.

2. Procédé selon la revendication 1, **caractérisé en ce que** la réaction à une modification dans un anneau ou anneau partiel est limitée à l'anneau ou anneau partiel correspondant.

3. Procédé selon la revendication 1 ou 2, **caractérisé en ce que** chaque noeud de réseau dans chaque anneau partiel connecté est configuré de manière absolument identique.

4. Procédé selon l'une quelconque des revendications précédentes, **caractérisé en ce que** les deux contrôleurs de segment dudit segment de réseau se trouvent dans le même anneau, notamment dans le même anneau Ethernet, lorsqu'on connecte un segment de réseau à un anneau, notamment à un anneau Ethernet.

5. Procédé selon l'une quelconque des revendications précédentes, **caractérisé en ce que** chaque contrôleur de segment envoie des paquets de contrôle dans le segment de réseau connecté, par absence desdits paquets de contrôle, les contrôleurs de segment identifiant une interruption du segment de réseau, alors qu'en revanche, le segment de réseau est fermé si un contrôleur de segment réceptionne les paquets de contrôle sur l'autre extrémité respective du segment de réseau.

6. Procédé selon l'une quelconque des revendications précédentes, **caractérisé en ce que** dans un segment de réseau fermé, l'un des deux contrôleurs de segment a bloqué sur les extrémités de ligne dudit segment de réseau une extrémité de ligne pour le trafic de données, un contrôleur de segment ne réceptionnant et n'envoyant que les paquets de contrôle via un port bloqué pour le trafic de données.

7. Procédé selon l'une quelconque des revendications précédentes, **caractérisé en ce que** la décision de savoir lequel des deux contrôleurs de segment bloque son extrémité de ligne est prise par chaque contrôleur de segment à l'aide du contenu des paquets de contrôle, étant impliquée à cet effet l'adresse MAC, notamment l'adresse MAC Ethernet des contrôleurs de segment participants et le contrôleur de segment ayant l'adresse MAC la plus élevée, notamment l'adresse MAC Ethernet la plus élevée bloquant l'extrémité de ligne d'un segment de réseau fermé.

8. Procédé selon l'une quelconque des revendications précédentes, **caractérisé en ce que** lors de la défaillance d'une connexion dans le segment de réseau connecté, au moyen de contrôleurs de segment, à l'endroit interrompu, les noeuds de réseau informent les contrôleurs de segment de l'interruption, suite à quoi, le contrôleur de segment ayant l'extrémité de ligne bloquée libère immédiatement ladite extrémité de ligne pour la transmission de données.

9. Procédé selon l'une quelconque des revendications précédentes, **caractérisé en ce que** lors du rétablissement d'une connexion interrompue, chaque noeuds de réseau dans un segment de réseau maintient d'abord bloqué le port de ladite connexion, sachant qu'alors via ledit port bloqué, seuls les paquets de contrôle des contrôleurs de segment sont réceptionnés et retransmis.

10. Procédé selon l'une quelconque des revendications précédentes, **caractérisé en ce que** l'instruction adressée aux noeuds de réseau dans le segment de réseau pour la libération de la transmission de données a lieu via un contrôleur de segment, pour ce faire, un contrôleur de segment communique audit noeud de réseau le moment de la libération dans le paquet de contrôle et à ce moment, alors l'un des deux contrôleurs de segment bloque l'extrémité de ligne du segment de réseau, sachant que simultanément, tous les tableaux d'adresses dans ledit segment de réseau sont supprimés et le noeud de réseau ayant reçu l'instruction libère son port dans ledit segment de réseau pour la transmission.
